# DEMANDE DE BREVET EUROPEEN

(11) **EP 4 644 258 A1**
(43) Date de publication de la demande: **05.11.2025**
(21) Numéro de dépôt: 25173271.5
(22) Date de dépôt: 29.04.2025
(51) Int. Cl.: B64D 37/04, B64D 37/30

(54) **PROCÉDÉ DE MONTAGE D'UNE BOÎTE À HYDROGÈNE DANS UNE NACELLE POUR UN AÉRONEF À PROPULSION À HYDROGÈNE**

(30) Priorité: 30.04.2024 FR 2404492
(71) Demandeur: AIRBUS OPERATIONS (S.A.S.), 31060 Toulouse (FR)
(72) Inventeur: LABARTHE, Christophe, 31060 Toulouse (FR); CZAPLA, Lionel, 31060 Toulouse (FR); BAMBINA, Flavio, 31060 Toulouse (FR)
(74) Mandataire: BCF Global

(57) **Abrégé**

L'invention concerne un procédé de montage, dans une nacelle (1) pour aéronef à propulsion hydrogène, d'une boîte (2) contenant au moins une partie de l'équipement nécessaire au transport de dihydrogène à un moteur de l'aéronef, dite boîte H2, le procédé de montage comprenant une étape de positionnement de la boîte H2 (2) dans la nacelle (1) grâce à au moins un rail solidarisé à un châssis (4) de la nacelle (1) et/ou à la boîte H2 (2).

## Description

La présente invention se rapporte à un procédé de montage dans une nacelle pour aéronef à propulsion hydrogène d'une boîte comprenant au moins une partie de l'équipement nécessaire au transport de dihydrogène au moteur de l'aéronef, dite boîte H2.

### Technique antérieure

Dans un effort de réduction de l'impact climatique dû à l'aviation, la Titulaire a développé des projets d'aéronefs dont les moteurs fonctionnent avec propulsion à hydrogène.

Ce type de propulsion nécessite un équipement spécifique dont certains éléments au moins sont positionnés dans une boîte, dite boîte à hydrogène (H2), installée dans la nacelle de l'aéronef.

Néanmoins, une telle boîte H2 est lourde et encombrante, et, de ce fait, la mise en place de la boîte H2 dans la nacelle s'avère très délicate, d'autant plus que la nacelle elle-même est encombrée et peu spacieuse.

Le but de l'invention est de remédier au moins partiellement à ces inconvénients.

### Résumé

A cet effet, il est proposé un procédé de montage, dans une nacelle pour aéronef à propulsion hydrogène, d'une boîte contenant au moins une partie de l'équipement nécessaire au transport de dihydrogène à un moteur de l'aéronef, dite boîte H2, le procédé de montage comprenant une étape de positionnement de la boîte dans la nacelle grâce à au moins un rail solidaire d'un châssis de la nacelle et/ou de la boîte H2.

Ainsi, grâce au procédé selon la présente invention, il est possible à un opérateur d'installer la boîte H2 dans la nacelle, malgré son poids et son encombrement, en évitant de surcroit d'ajouter de la masse supplémentaire dans l'aéronef, le rail pouvant être retiré une fois la boîte installée.

De préférence, chaque rail est monté amoviblement au châssis de la nacelle et/ou à la boîte H2.

Selon un autre aspect, le procédé comprend une étape de positionnement du rail par rapport au châssis dans une position d'installation de la boîte H2.

Selon un autre aspect, l'étape de positionnement du rail comprend une étape de blocage du rail dans la position d'installation de la boîte H2.

Selon un autre aspect, l'étape de positionnement du rail comprend une étape de positionnement d'une interface de montage entre le châssis et ledit au moins un rail.

Selon un autre aspect, au cours de l'étape de positionnement du rail par rapport au châssis, on visse le rail au châssis par l'interface de montage.

Selon un autre aspect, au cours de l'étape de positionnement du rail par rapport au châssis, le rail est déplacé dans la nacelle en étant guidé par au moins un galet de guidage de l'interface de montage.

Selon un autre aspect, l'étape de positionnement de la boîte H2 dans la nacelle comprend une étape de guidage de la boîte le long du rail par au moins un galet de guidage.

Selon un autre aspect, le procédé comprend une étape de fixation de la boîte dans la nacelle, puis une étape d'extraction du rail hors de la nacelle.

L'invention a également pour objet une structure intermédiaire pour le procédé de montage tel que précédemment décrit, comprenant la nacelle, la boîte H2, et l'interface de montage, l'interface de montage étant d'une part fixée au châssis et d'autre part fixée au rail.

L'invention a également pour objet une structure intermédiaire pour le procédé de montage tel que précédemment décrit, comprenant la nacelle, la boîte H2, et l'interface de montage, l'interface de montage comprenant une plaque de fixation de l'interface au châssis, un support d'au moins un galet de guidage, et ledit au moins un galet de guidage.

### Brève description des dessins

D'autres caractéristiques, détails et avantages apparaîtront à la lecture de la description détaillée ci-après, et à l'analyse des dessins annexés, sur lesquels :
**Fig. 1**

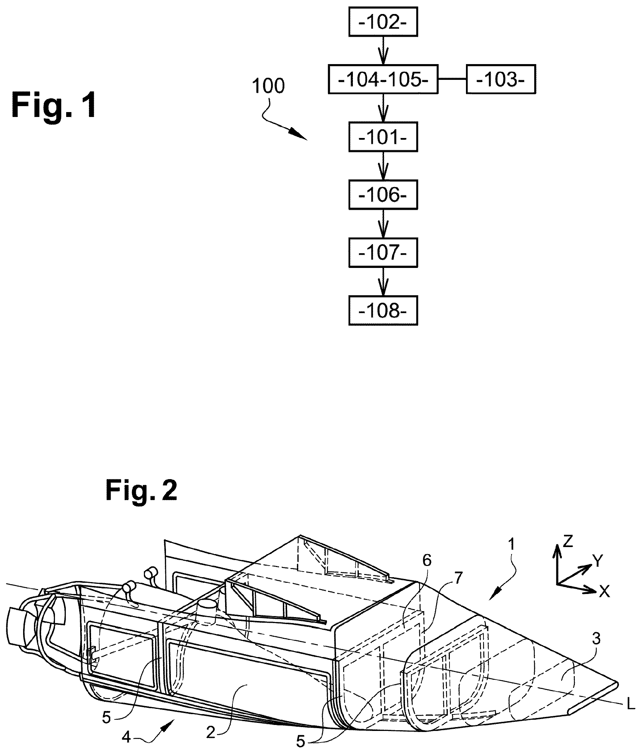

   [Fig. 1] est un diagramme illustrant le déroulement d'un procédé de montage selon la présente invention d'une boîte dite boîte H2 dans une nacelle pour un aéronef à propulsion.
**Fig. 2**
   [Fig. 2] est une vue en perspective d'une nacelle pour aéronef destinée à recevoir une boîte H2, dans une position initiale.
**Fig. 3**

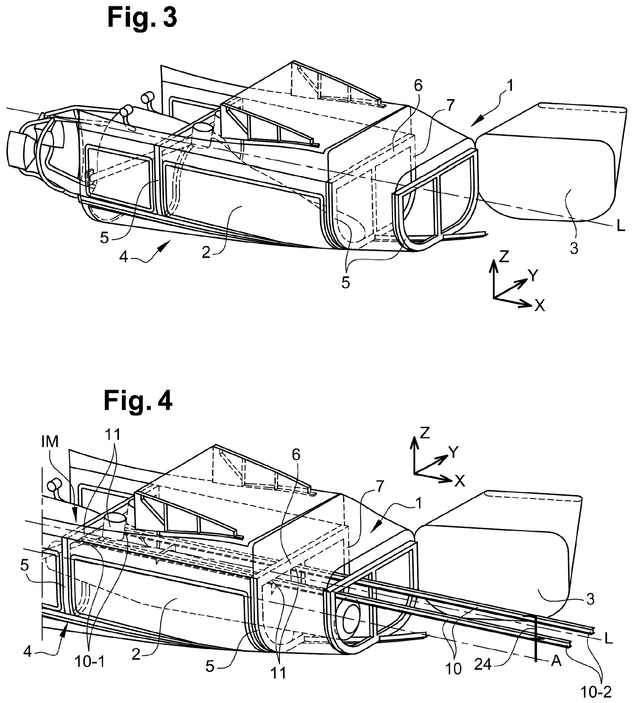

   [Fig. 3] est une vue en perspective de la nacelle de la figure 2, un accès ayant été ouvert pour permettre le passage de la boîte H2.
**Fig. 4**
   [Fig. 4] est une vue en perspective de la nacelle de la figure 3, des rails ayant été solidarisés à un châssis de la nacelle, pour installer une boîte H2, selon un mode de réalisation de l'invention.
**Fig. 5**

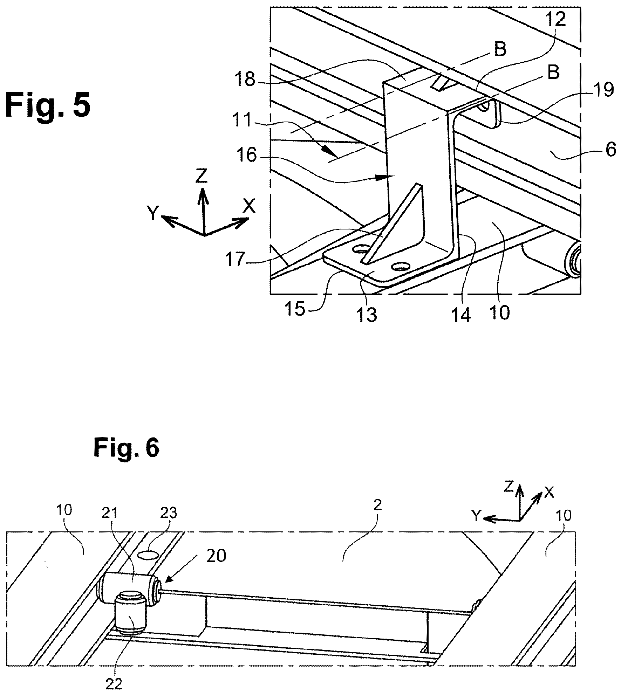

   [Fig. 5] est une vue de détail de la nacelle de la figure 4.
**Fig. 6**
   [Fig. 6] est une autre vue de détail de la nacelle de la figure 4.
**Fig. 7**

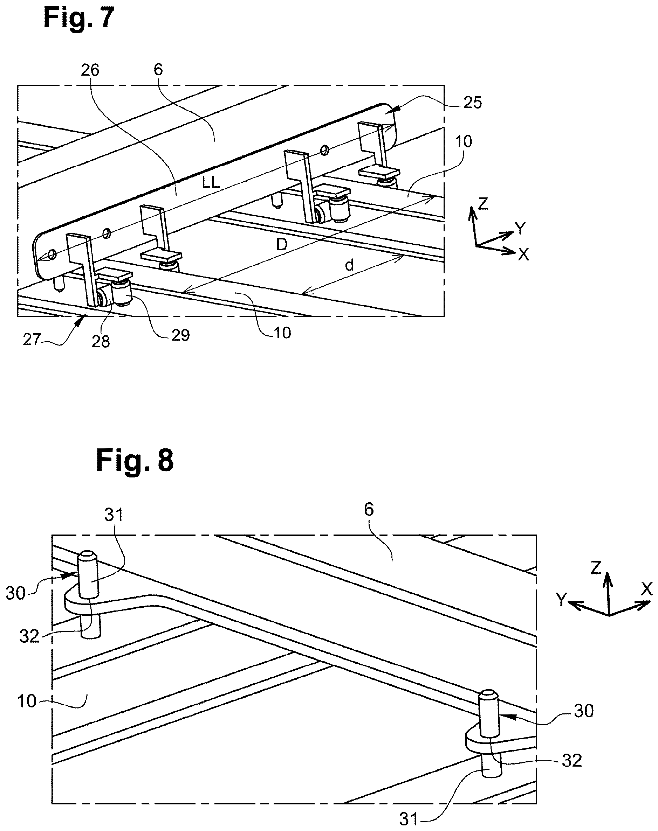

   [Fig. 7] est une vue en de détail de la nacelle de la figure 4, selon un deuxième mode de réalisation de l'invention.
**Fig. 8**
   [Fig. 8] est une autre vue de détail de la nacelle de la figure 7.
**Fig. 9**

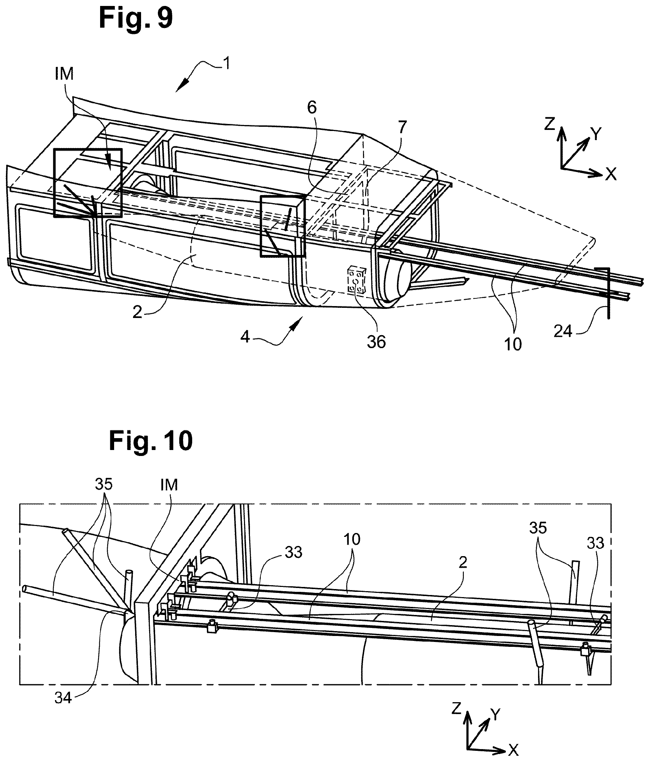

   [Fig. 9] est une vue en perspective de la nacelle de la figure 4, selon un troisième mode de réalisation de l'invention, des moyens de fixation ayant été ajoutés pour solidariser la boîte H2 dans la nacelle.
**Fig. 10**
   [Fig. 10] est une vue de détail de la nacelle de la figure 9.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que l'homme du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en œuvre relativement simplifiées de la présente invention. Comme l'homme du métier le comprend, d'autres mises en œuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et l'homme du métier pourra apporter d'autres modifications tout en restant dans le cadre de la présente invention.

En outre, toutes les déclarations ci-après relatives aux principes, aspects et mises en œuvre de la présente invention, ainsi que les exemples spécifiques de celle-ci, visent à englober à la fois les équivalents structurels et fonctionnels de celle-ci, qu'ils soient actuellement connus ou développés à l'avenir.

Sur les figures, on a représenté un repère orthogonal (X, Y, Z), non limitatif, pour simplifier la description. La direction X correspond par exemple à une direction longitudinale (axe de roulis) d'un aéronef, la direction Y correspond à une direction transversale (axe de tangage) et la direction Z correspond à une direction verticale quand l'aéronef est au sol (axe de lacet).

Comme il ressort des figures, l'invention a pour objet un procédé 100 de montage d'une boîte, dite boîte H2, dans une nacelle, pour un aéronef à propulsion hydrogène. Sur les figures, la nacelle est référencée 1 et la boîte référencée 2.

La nacelle 1 comprend un cône arrière 3 que l'on peut détacher ou tout au moins déplacer entre une position de fermeture de la nacelle 1 (figure 2) et une position d'ouverture de la nacelle 1 (figure 3). On note L un axe longitudinal de la nacelle 1, qui s'étend avantageusement dans la direction X.

Comme visible par transparence sur les figures, la nacelle 1 comprend un châssis 4 comportant un ensemble d'éléments de structure 5. Chacun de ces éléments 5 comprend une portion rectiligne 6 s'étendant parallèlement à l'axe Y et une portion courbée 7, de sorte à présenter une forme générale de D. Chaque élément comprend une ouverture formée par les portions 6 et 7, ce qui permet de recevoir la boîte 2 dans la nacelle 1.

La boîte 2 contient au moins une partie, et de préférence tous les équipements (pompe, échangeurs de chaleur) nécessaires pour transporter l'hydrogène jusqu'au moteur de l'aéronef. De façon non limitative, la boîte 2 présente, sur les modes de réalisation illustrés, une forme allongée sensiblement cylindrique, d'axe longitudinal A. L'axe longitudinal A de la boîte 2 est avantageusement parallèle à la direction X. On détaillera ultérieurement des moyens de fixation de la boîte 2 dans la nacelle 1.

Comme particulièrement visible sur la figure 1, le procédé 100 comprend une étape 101 de positionnement de la boîte 2 dans la nacelle 1 grâce à au moins un rail 10 solidarisé à un châssis de la nacelle 1 et/ou à la boîte H2, 2.

On appelle par la suite position d'installation de la boîte 2 la position finale de la boîte 2 dans la nacelle 1.

Sur les modes de réalisation illustrés, deux rails 10 sont montés. Néanmoins, l'invention n'est pas limitée à ce chiffre, et, selon la forme de la boîte 2, son poids, et l'encombrement de l'espace intérieur de la nacelle 1, le procédé 100 prévoit de monter moins ou au contraire plus de rails 10.

De préférence, chaque rail 10 est monté amoviblement et destiné à être sorti de la nacelle 1 une fois la boîte 2 mise en place, comme il sera expliqué.

Avantageusement, chaque rail 10 s'étend longitudinalement parallèlement à l'axe longitudinal L de nacelle 1 entre une extrémité 10-1, destinée à être disposée dans la nacelle 1, et une extrémité 10-2, destinée à être disposée à l'extérieur de la nacelle 1.

Sur les modes de réalisation illustrés, les rails 10 sont des pièces allongées, les bords internes des deux rails 10 se faisant face à une distance notée d, tandis que des bords externes des deux rails 10 sont distants d'une longueur D (figure 7).

Comme visible sur la figure 1, le procédé 100 comprend une étape préalable 102 de préparation de la nacelle 1. Au cours de cette étape, on déplace le cône arrière 3 de sorte à ouvrir la nacelle 1 pour laisser passer les rails 10 et la boîte 2.

Comme également visible sur la figure 1, le procédé 100 comprend une étape 103 de positionnement de chaque rail 10 par rapport au châssis dans la position d'installation de la boîte.

L'étape 103 comprend avantageusement une étape 104 de positionnement d'une interface de montage, notée IM, entre le châssis 4 et l'un des rails 10, décrite ultérieurement en détail.

Selon un premier mode de réalisation, au cours de l'étape de positionnement 103 du rail par rapport au châssis, on visse le rail au châssis par l'interface de montage, comme il va être détaillé ultérieurement en référence plus particulièrement aux figures 4 et 5.

Selon un deuxième et un troisième modes de réalisation, au cours de l'étape de positionnement 103 du rail par rapport au châssis, les rails 10 sont déplacés dans la nacelle 1 en étant guidés par au moins un galet de guidage de l'interface de montage, comme il va également être détaillé ultérieurement en référence plus particulièrement aux figures 7, 9 et 10.

Comme il ressort de la figure 1, l'étape de positionnement 103 comprend une étape 105 de blocage de chaque rail 10 dans la position d'installation de la boîte 2.

On note que l'étape 101 de positionnement de la boîte 2 dans la nacelle 1 comprend une étape de fixation de la boîte 2 aux rails (troisième mode de réalisation), ou, alternativement, le guidage de la boîte le long du rail par au moins un galet de guidage (premier et deuxième modes de réalisation).

Comme illustré sur la figure 1, le procédé 100 comprend également une étape 106 de fixation de la boîte 2 dans la nacelle, dans sa position d'installation, puis une étape 107 d'extraction des rails 10 et enfin une étape 108 de fermeture de la nacelle 1 par replacement du cône arrière 3.

On détaille maintenant le procédé de montage 100 selon un premier mode de réalisation, en relation avec les figures 4, 5 et 6.

Selon ce mode de réalisation, les rails 10 sont fixés au châssis 4 par un ensemble d'interfaces de montage IM appelées interfaces de jonction, référencées 11.

Comme il ressort de la figure 4, chaque rail 10 est solidaire de deux éléments de structure 5, par l'intermédiaire d'une interface de jonction 11 respective. Sur le mode de réalisation illustré, on utilise quatre interfaces de jonction 11. Bien entendu, l'invention n'est pas limitée à cette configuration, et le nombre d'interfaces 11 dépend notamment du poids et de la géométrie de la boîte 2.

Comme particulièrement visible sur la figure 5, chaque interface de jonction 11 comprend une première extrémité 12 solidaire de la portion rectiligne 6, une extrémité 13 solidaire du rail 10 et une partie intermédiaire 14 disposée entre l'extrémité 12 et l'extrémité 13.

L'extrémité 13 comprend une plaque 15 munie d'orifices pour visser l'extrémité 13 au rail 10. Comme illustrée sur la figure 5, la plaque 15 est posée sur le rail 10 au cours de l'étape 104.

La partie intermédiaire 14 prolonge l'extrémité 13 par une plaque 16, s'étendant dans un plan (Y, Z) et orthogonale à la plaque 15 de l'extrémité 13. Une équerre de renforcement 17 est avantageusement disposée entre la plaque 14 et une partie de plaque 16.

La partie 14 comprend une plaque 18, s'étendant dans un plan (X, Y), dans le prolongement de la plaque 16, et prolongée par une plaque 19 faisant saillie hors de la plaque 18 et s'étendant dans un plan (Y, Z). La plaque 19 forme l'extrémité 12.

Comme illustrée sur la figure 5, la plaque 19 est posée contre la portion rectiligne 6 dans l'étape 104. La plaque 19 est munie d'orifices pour visser l'interface 11 à l'élément de structure 5 (boulons référencés B sur la figure 5).

Selon ce premier mode de réalisation, au cours de l'étape 103, on place les rails 10 dans la nacelle 1 en vissant les interfaces de jonction 11 aux rails 10 et éventuellement au châssis 4. A l'issue de cette étape, les rails 10 s'étendent dans les ouvertures des éléments de structure 5 depuis l'extrémité 10-1 à l'intérieur de la nacelle 1 jusqu'à l'extrémité 10-2 libre à l'extérieur de la nacelle 1. Ensuite, on place la boîte H2, comme il va être maintenant expliqué.

De préférence, la boîte 2 est munie d'un ensemble 20 d'au moins un galet de guidage de la boîte 2 le long de chaque rail 10.

Sur la figure 6, la boîte 2 est munie de deux paires de galet de guidage 20 (une seule paire étant visible), chaque paire assurant la translation de la boîte 2 le long d'un rail respectif. Les paires sont disposées en face l'une de l'autre.

Chaque paire de galets de guidage 20 comprend un premier rouleau de guidage 21, dont l'axe de rotation s'étend selon la direction Y et un deuxième rouleau de guidage 22, dont l'axe de rotation s'étend selon la direction Z.

On note qu'avantageusement, chaque rail 10 est muni d'un élément de fin de course 23 pour arrêter le mouvement de la boîte 2 le long du rail 10 dans la position d'installation de la boîte 2 dans la nacelle 1.

Ainsi, au cours de l'étape 101, on positionne la boîte 2 à l'extrémité libre 10-2 du rail 10 puis on fait glisser la boîte 2 sous le rail 10, les rouleaux de guidage 21, 22, tournant autour de leur axe respectif, jusqu'à l'arrêt de fin de course 23.

On note qu'avantageusement chaque rail 10 est muni d'une goupille de verrouillage 24 à proximité de l'extrémité libre 10-2 pour éviter que la boîte 2 ne glisse en dehors du rail 10 tant que la boîte 2 n'est pas fixée dans sa position d'installation.

On détaille un deuxième mode de réalisation, illustré sur les figures 6, 7 et 8.

Selon ce mode de réalisation, les rails 10 sont fixés au châssis 4 par un ensemble d'au moins une interface de montage IM, référencée 25 sur la figure 7. Sur le mode de réalisation illustré, deux interfaces 25 sont suffisantes, ce chiffre n'étant bien entendu pas limitatif.

Comme illustré sur la figure 7, l'interface de montage 25 comprend une plaque 26 de solidarisation de l'interface à la portion rectiligne 6 de l'élément de structure 5. La plaque 26 s'étend dans un plan (Y, Z) et présente une longueur notée LL. De préférence, la longueur LL est supérieure à la distance D entre les deux rails 10, ce qui assure qu'une seule plaque 26 connecte les deux rails 10 à la fois.

Bien entendu, l'invention n'est pas limitée à cette configuration et on peut envisager d'associer une plaque 26 respective, dédiée à un rail 10 uniquement.

L'interface de montage 25 comprend un ensemble 27 d'au moins un galet de guidage du rail 10 dans la nacelle 1. Sur le mode de réalisation illustré, l'interface 25 comprend deux paires de rouleaux pour le guidage de l'un des rails. Chaque paire comprend un premier rouleau de guidage, 28, dont l'axe de rotation s'étend selon la direction Y et un deuxième rouleau de guidage, 29, dont l'axe de rotation s'étend dans la direction Z. L'interface de montage 25 comprend également un support associé à chaque rouleau de guidage.

Selon ce deuxième mode de réalisation, au cours de l'étape 103, on dispose l'extrémité 10-1 de chaque rail 10 sous l'interface de montage 25 la plus proche de l'ouverture de la nacelle 1, les deux paires de rouleaux de guidage 28, 29 étant positionnés de part et d'autre du rail 10. Puis, on enfonce chaque rail 10 dans la nacelle 1, grâce au guidage des rouleaux.

A l'issue de cette étape, les rails 10 s'étendent dans les ouvertures des éléments de structure 5 depuis l'extrémité 10-1 à l'intérieur de la nacelle 1 jusqu'à l'extrémité 10-2 libre à l'extérieur de la nacelle 1.

Ensuite, on fixe les rails en position dans la nacelle 1 par exemple à l'aide moyens de fixation 30. Sur la figure 8, les moyens de fixation 30 comprennent une tige 31 conformée pour être emmanchée à force dans un orifice 32 d'une oreille dont est avantageusement munie la portion rectiligne 6 de l'élément de structure 5. Les moyens de fixation 30 sont disposés derrière chaque interface de montage 25.

Ensuite, on place la boîte H2, comme il a déjà été expliqué selon le premier mode de réalisation, en relation avec la figure 6.

On note qu'avantageusement chaque rail 10 est muni d'une goupille de verrouillage 24 à proximité de l'extrémité libre 10-2, comme déjà expliqué pour le premier mode de réalisation.

Selon un troisième mode de réalisation, illustré sur les figures 9 et 10, les rails 10 sont positionnés comme pour le deuxième mode de réalisation, tandis la boîte 2 est fixée directement, par exemple vissée, au rail. Sur la figure 10, la boîte 2 est munie de barrettes 33 de fixation de la boîte 2 aux rails 10.

On note qu'avantageusement chaque rail 10 est muni d'une goupille de verrouillage 24 à proximité de l'extrémité libre 10-2, comme déjà expliqué pour le premier mode de réalisation.

On détaille maintenant l'étape 106 de fixation de la boîte 2 dans la position d'installation, en relation avec les figures 9 et 10. Comme visible sur ces figures, la boîte 2 comprend des œillets 34 auxquels on fixe des tiges de connexion 35 au cours de l'étape 106, ce qui permet d'installer définitivement la boîte 2 dans la nacelle 1. On note que, bien que les figures 9 et 10 se rapportent au troisième mode de réalisation, la fixation de la boîte 2 dans la nacelle 1 est similaire pour le premier et le deuxième modes de réalisation.

Ensuite, au cours de l'étape 107, quel que soit le mode de réalisation, on désolidarise les rails 10 de la boîte 2 et/ou du châssis 4, et on retire les rails 10 de la nacelle 1, notamment en sortant les interfaces IM.

On note que, pour positionner la boîte 2 devant les rails 10, on peut utiliser un chariot pour transporter la boîte 2. Avantageusement, une interface 36 à demeure de la boîte 2 permet le chargement de la boîte par le chariot.

Comme il ressort de la description qui précède, le procédé de montage selon la présente invention permet de façon sécurisée, rapide et fiable, d'installer la boîte H2 dans la nacelle d'un aéronef à propulsion à hydrogène.

L'invention a également pour objet la structure intermédiaire, comprenant la nacelle 1, la boîte 2 et les interfaces de montage IM, chaque interface étant d'une part reliée au châssis et d'autre part reliée audit rail, selon chacun des modes de réalisation précédemment décrits.

On note que l'invention ne se limite pas aux modes de réalisation décrits, et qu'eux mêmes sont combinables dans la mesure où ils ne sont pas incompatibles.

Bien que les mises en œuvre décrites ci-dessus aient été décrites et représentées en référence à des étapes particulières exécutées dans un ordre particulier, il sera entendu que ces étapes peuvent être combinées, subdivisées ou réordonnées sans s'écarter des enseignements de la présente divulgation. Au moins certaines des étapes peuvent être exécutées en parallèle ou en série. Par conséquent, l'ordre et le regroupement des étapes ne constituent pas une limitation de la présente invention.

Des modifications et des améliorations aux mises en œuvre décrites ci-dessus de la présente invention peuvent apparaître à l'homme du métier. La description ci-dessus est illustrative au travers d'exemples plutôt que limitative. La portée de la présente invention est donc limitée uniquement par la portée des revendications ci-dessous.

## Revendications

1. Procédé de montage, dans une nacelle (1) pour aéronef à propulsion hydrogène, d'une boîte (2) contenant au moins une partie de l'équipement nécessaire au transport de dihydrogène à un moteur de l'aéronef, dite boîte H2, le procédé de montage (100) comprenant une étape (101) de positionnement de la boîte H2 (2) dans la nacelle (1) grâce à au moins un rail (10) solidarisé à un châssis (4) de la nacelle (1) ou à la boîte H2 (2).

2. Procédé de montage selon la revendication 1, comprenant une étape (103) de positionnement du rail (10) par rapport au châssis (4) dans une position d'installation de la boîte.

3. Procédé de montage selon la revendication précédente, dans lequel l'étape (103) de positionnement du rail (10) comprend une étape de blocage du rail (10) dans la position d'installation de la boîte H2 (2).

4. Procédé de montage selon l'une des revendications précédentes, dans lequel l'étape (103) de positionnement du rail (10) comprend une étape de positionnement d'une interface de montage (IM) entre le châssis (4) et ledit au moins un rail (10).

5. Procédé de montage selon la revendication 4, dans lequel, au cours de l'étape (103) de positionnement du rail (10) par rapport au châssis (4), on visse le rail (10) au châssis (4) par l'intermédiaire de l'interface de montage (IM).

6. Procédé de montage selon la revendication 4, dans lequel, au cours de l'étape (103) de positionnement du rail par rapport au châssis, le rail (10) est déplacé dans la nacelle (1) en étant guidé par au moins un galet de guidage (20) de l'interface de montage (IM).

7. Procédé de montage selon l'une des revendications précédentes, dans lequel l'étape de positionnement de la boîte (2) dans la nacelle (1) comprend une étape de guidage de la boîte le long du rail par au moins un galet de guidage.

8. Procédé de montage selon l'une des revendications précédentes, comprenant une étape (106) de fixation de la boîte H2 (2) dans la nacelle (1) puis une étape d'extraction dudit rail hors de la nacelle.

9. Structure intermédiaire pour le procédé de montage selon la revendication 4, comprenant la nacelle (1), la boîte H2 (2), et au moins une interface de montage (IM), l'interface de montage (IM) étant d'une part fixée au châssis (4) et d'autre part fixée audit rail (10).

10. Structure intermédiaire pour le procédé de montage selon la revendication 4, comprenant la nacelle (1), la boîte H2 (2), et au moins une interface de montage (IM), l'interface de montage (IM) comprenant une plaque de fixation de l'interface (IM) au châssis (4), et au moins un galet de guidage (20) du rail (10) dans la nacelle.
